# EUROPÄISCHE PATENTSCHRIFT

(11) **EP 1 797 341 B1**
(45) Veröffentlichungstag und Bekanntmachung des Hinweises auf die Patenterteilung: **25.11.2009**
(21) Anmeldenummer: 05789701.9
(22) Anmeldetag: 20.09.2005
(51) Int. Cl.: F16B 19/08

(54) **BLINDNIETE**
BLIND RIVET
RIVET BORGNE

(30) Priorität: 08.10.2004 DE 102004049045
(43) Veröffentlichungstag der Anmeldung: 20.06.2007
(73) Patentinhaber: fischerwerke GmbH & Co. KG, 72178 Waldachtal (DE)
(72) Erfinder: HAUG, Willi, 72250 Freudenstadt-Musbach (DE); SCHÄFFER, Marc, 72160 Horb-Bildechingen (DE)
(74) Vertreter: Suchy, Ulrich Johannes
(86) Internationale Anmeldenummer: PCT/EP2005/010095
(87) Internationale Veröffentlichungsnummer: WO 2006/039981

(56) Entgegenhaltungen:
- EP-A- 0 351 715
- WO-A-00/45056
- DE-A1- 2 334 385
- DE-A1- 3 744 450

## Beschreibung

Die Erfindung betrifft eine Blindniete mit den Merkmalen des Oberbegriffs des Anspruchs 1.

Die Blindniete ist zur Blechbefestigung und/oder zur Verbindung zweier Bleche vorgesehen. Als Niete wird sie bezeichnet, weil sie durch Umformen befestigt wird und/oder durch Umformen zwei Bleche verbindet. Sie könnte allgemein auch als Befestigungs- und/oder Verbindungselement bezeichnet werden. Mit der Bezeichnung als "Blind" wird zum Ausdruck gebracht, dass ein einseitiger Zugang der Verbindungsstelle genügt.

Die Druckschrift DE 37 44 450 A1 zeigt eine Blindniete mit einem als Zugdom ausgestalteten Spreizkörper und mit einer Spreizhülse, die durch Aufschieben auf den Spreizkörper aufweitbar ist. Die Blindniete weist entweder an Ihrer Spreizhülse oder an ihrem Spreizkörper eine umlaufende Ringschneide auf, mit der ein Loch zum Vernieten der Blindniete in ein Bauteil geschnitten werden kann. Die Blindniete weist zudern einen Hohlraum innerhalb der Ringschneide zur Aufnahme eines Schnittabfallteils auf.

Aus der DE 102 41 326 A1 ist eine weitere Blindniete bekannt, die als rohrförmige Hohlniete mit einem Radialflansch an einem Ende ausgebildet ist. Am anderen Ende weist die Blindniete ein Innengewinde auf, in das ein Gewindebolzen einschraubbar oder eingeschraubt ist. Ein Umfangsrand an einem dem Flansch fernen Ende der bekannten Blindniete bildet eine Ringschneide zum Schneiden oder Stanzen eines Lochs. Zum Vernieten wird die bekannte Blindniete durch ein oder zwei aufeinanderliegende Bleche gedrückt, wobei die Ringschneide ein Loch schneidet. Zur Versteifung der Blindniete beim Lochschneiden ist der Gewindebolzen vorzugsweise eingeschraubt. Ein Gegenhalter (Matrize) stützt das oder die Bleche beim Schneiden. Nach dem Schneiden des Lochs wird die bekannte Blindniete durch Druck am Gewindebolzen gestaucht, wodurch sich ein umlaufender, nach außen stehender Ringwulst bildet, zwischen dem und dem Flansch das oder die Bleche eingespannt sind. Die Blindniete ist dadurch am Blech befestigt und bei zwei aufeinander liegenden Blechen sind diese miteinander verbunden. Das Innengewinde der Blindniete ermöglicht ein Festschrauben eines Gegenstands.

Eine ähnliche Blindniete offenbart die EP 0 351 715 A2. Diese Blindniete weist ebenfalls eine rohrförmige Hohlniete mit einem Radialflansch an einem Ende auf. Zum Vernieten weist diese Blindniete einen an sich bekannten Dorn mit einem Kopf und einer Sollbruchstelle auf. Durch Zug am Dorn wird die Blindniete gestaucht und gespreizt und dadurch vernietet. Durch weitere Steigerung der Zugkraft reißt der Dorn an der Sollbruchstelle. Die bekannte Blindniete weist eine Ringschneide auf, die an einem dem Radialflansch fernen Stirnrand der Blindniete oder am Kopf des Doms ausgebildet ist. Wahlweise kann der Kopf des Doms eine Spitze aufweisen. Auch diese Blindniete schneidet sich ihr Loch selbst. Ein Gegenhalter ist entbehrlich, wenn eines der zu nietenden Bauteile eine ausreichende Steifigkeit aufweist, beispielsweise beim Vernieten eines Blechs mit einem U-Träger.

Die Bezeichnung als Blindniete ist bei den bekannten Blindnieten nicht korrekt, weil wegen des Gegenhalters ein beidseitiger Zugang der Verbindungsstelle notwendig ist.

Der Erfindung liegt die Aufgabe zugrunde, eine Blindniete vorzuschlagen, die sich ihr Loch selbst schafft und die losen Schnittabfall vermeidet. Dabei soll ein einseitiger Zugang zur Verbindungsstelle zum Nieten genügen.

Die erfindungsgemäße Blindniete ist insbesondere für den Karosseriebau vorgesehen. Es sollen sich Bleche miteinander verbinden lassen und/oder eine Befestigungsmöglichkeit an einem Blech geschaffen werden. Dabei soll ein einseitiger Zugang der Verbindungsstelle genügen, beispielsweise ein Nieten an einem aus Blech geformten Hohlraum, dessen Innenraum nicht zugänglich ist, möglich sein.

Die Aufgabe wird erfindungsgemäß durch die Merkmale des Anspruchs 1 gelöst. Die erfindungsgemäße Blindniete weist einen Spreizkörper und eine Spreizhülse auf, die durch Aufschieben auf den Spreizkörper aufweitbar ist. Gleichbedeutend mit dem Aufschieben der Spreizhülse auf den Spreizkörper ist ein Einziehen des Spreizkörpers in die Spreizhülse. Das Aufweiten der Spreizhülse wird vielfach auch als Aufspreizen bezeichnet. Das Aufweiten dient dem Hintergreifen eines Blechs oder dgl., durch das die Blindniete gesteckt ist, um die Blindniete formschlüssig gegen ein Herausziehen am Blech zu befestigen. Der Spreizkörper ist beispielsweise ein Konus, es kommen beispielsweise auch eine Pyramide oder ein Keil als Spreizkörper in Betracht. Die Spreizhülse ist beispielsweise ein rohrförmig aus Blech gebogenes Teil, sie kann einen oder mehrere Schlitze zur leichteren Aufweitbarkeit aufweisen. Grundsätzlich kann die Spreizhülse auch als rohrförmige Hohlniete ausgebildet sein, die beim Nieten vom Spreizkörper gestaucht wird und dadurch einen nach außen stehenden Ringwulst bildet, der das Blech, durch das die Blindniete gesteckt ist, hintergreift. Der Spreizkörper kann in diesem Fall eine radiale, insbesondere lochscheibenförmige Fläche an seiner der Spreizhülse zugewandten Seite aufweisen. Vorzugsweise weist der Spreizkörper einen Schaft auf, mit dem er zum Aufweiten der Spreizhülse in diese einziehbar ist. Außerdem ist am Schaft des Spreizkörpers ein Gegenstand befestigbar. Der Schaft kann mit dem Spreizkörper einstückig oder beispielsweise mit einer Schraubverbindung mit dem Spreizkörper verbunden bzw. verbindbar sein.

Die erfindungsgemäße Blindniete weist eine Ringschneide auf, die vorzugsweise am Spreizkörper ausgebildet ist. Die Blindniete wird mit der Ringschneide gegen ein Blech gedrückt und schneidet ein Loch für die Blindniete in das Blech. Dies wird vielfach auch als Stanzen bezeichnet. Das Loch zum Vernieten der Blindniete mit dem Blech ist also mit der Blindniete selbst herstellbar. Es ist vorgesehen, dass die Blindniete mit hoher Geschwindigkeit durch das Blech "durchgeschossen" wird, dies kann mit handelsüblichen Bolzenschussgeräten erfolgen, Die Ringschneide verläuft vorzugsweise kreisförmig, andere Formen wie Ellipsen, Ovale oder mehreckige Verläufe sind allerdings möglich.

Gemäß dem Kennzeichen des Anspruchs 1 ist die Ringschneide der Blindniete unterbrochen. Eine Schnittlinie beim Lochschneiden mit der Blindniete ist durch die Unterbrechung der Ringschneide nicht geschlossen, das Schnittabfallteil wird nicht vollständig vom Blech getrennt sondern bleibt an der Unterbrechung der Ringschneide mit dem Blech verbunden. Das Schnittabfallteil wird von der das Blech durchdringenden Blindniete zur Seite umgebogen.

Die Erfindung hat den Zweck und den Vorteil, dass ein Schnittabfallteil beim Lochschneiden mit der Ringschneide der Blindniete zuverlässig gehalten wird, das Schnittabfallteil bleibt mit dem Blech verbunden. Die Erfindung vermeidet losen Schnittabfall, der auf einer unzugänglichen Seite einer Verbindungsstelle nicht entfernt werden könnte. Solcher loser Schnittabfall wäre beispielsweise im Karosseriebau nicht akzeptabel, weil er beim Fahren Klappergeräusche verursachen und eine Hohlraumversiegelung beeinträchtigen würde. Die Erfindung hat somit den Vorteil, dass die Blindniete beispielsweise im Karosseriebau uneingeschränkt einsetzbar ist.

Eine bevorzugte Ausgestaltung der erfindungsgemäßen Blindniete weist einen Hohlraum innerhalb der Ringschneide auf, der mit der Ringschneide mündet. Ein Schnittabfallteil, das beim Lochschneiden mit der Ringscheide entsteht, gelangt in den Hohlraum und verbleibt klemmend dort. Aufgrund der hohen Durchschussenergie der Blindniete durch das Blech kann eine Verschweißung, also ein Stoffschluss zwischen dem Schnittabfallteil und der Blindniete stattfinden. Es ist nicht erforderlich, jedoch möglich, dass der Hohlraum eine Hinterschneidung aufweist, um das Schnittabfallteil zu halten. Ein zylindrischer oder auch prismatischer, d.h. ein eine achsparallele Wandung aufweisender Hohlraum genügt um das Schnittabfaliteil zuverlässig auch bei Vibrationen und Erschütterungen zu halten. Es ist auch denkbar, dass sich der Hohlraum verjüngt, so dass sich eine Pressverbindung mit dem Schnittabfallteil ausbildet. Da die Blindniete einen Hohlraum innerhalb der Ringschneide aufweist und die Ringschneide unterbrochen ist, vermeidet diese Ausgestaltung der Erfindung losen Schnittabfall beim Verbinden zweier aufeinander liegender Bleche durch Vernieten mit der erfindungsgemäßen Blindniete. Ein Schnittabfallteil des von der Blindniete zuerst durchdrungenen Blechs wird vom Hohlraum innerhalb der Ringschneide aufgenommen, ein Schnittabfallteil des als zweites durchdrungenen Blechs wird nicht vollständig vom Blech getrennt, sondern von der Blindniete zur Seite gebogen. Selbstverständlich ist diese Blindniete auch mit nur einem Blech vernietbar.

Eine Ausgestaltung der Erfindung sieht vor, dass die Ringschneide zumindest auf einem oder mehreren Abschnitten schräg zu einer gedachten Radialebene der Blindniete verläuft. Als günstig hat sich ein Winkel der Ringschneide von etwa 55° schräg zu einer gedachten Radialebene der Blindniete herausgestellt. Vorzugsweise verläuft die Ringschneide von einer höchsten, d.h. axial am weitesten vom liegenden Stelle ausgehend in beiden Umfangsrichtungen schräg und in axialer Richtung gesehen abfallend. Weist die Ringschneide eine Unterbrechung auf, befindet sich die höchste Stelle der Ringschneide vorzugsweise der Unterbrechung gegenüber. Der Schrägverlauf der Ringschneide bewirkt, dass beim Lochschneiden das Loch nicht über den gesamten Umfang gleichzeitig geschnitten wird, sondern dass eine oder zwei sich entgegengesetzt bewegende Schnittstellen gebildet werden, die sich in Umfangsrichtung über den Umfang des Lochs bewegen. Die Schnittkraft und eine Beanspruchung des Blechs wird dadurch verringert. Wird die Blindniete mit ausreichend hoher Geschwindigkeit durch das oder die Bleche "geschossen" ist ein Gegenhalter beim Lochschneiden entbehrlich. Bei Versuchen haben sich zwei aufeinanderliegende, zu vernietende Bleche beim "Durchschießen" der erfindungsgemäßen Blindniete um etwa die einfache Blechdicke kraterartig im Bereich um die Blindniete verformt. Diese Ausgestaltung der Erfindung hat den Vorteil, dass das Loch für die Blindniete mit der Blindniete ohne Verwendung eines Gegenhalters geschnitten werden kann. Das Setzen der Blindniete ist dadurch bei nur einseitigem Zugang der Verbindungsstelle möglich. Eine ausreichend hohe "Durchschussgeschwindigkeit" wird mit handelsüblichen Bolzenschussgeräten problemlos erreicht.

Ein weiterer Grund für die schräg von einer höchsten Stelle aus in beiden Umfangsrichtungen abfallende Ringschneide ist, dass bei einer unterbrochenen Ringschneide eine Schrägstellung der Blindniete beim "Durchschießen" durch das oder die Bleche vermieden wird. Mit dieser Ausgestaltung wird eine gerade, d.h. zum Blech senkrechte Durchdringung der Bleche erreicht. Die zuerst in das Blech eindringende höchste, d.h. axial am weitesten vorn liegende Stelle der Ringschneide verringert die Schnittkraft und führt die Blindniete beim Durchdringen der Bleche.

Eine Ausgestaltung der Erfindung sieht eine schräg nach außen verlaufende Schrägfläche vor, die sich an die Ringschneide anschließt. Die Schrägfläche kann beispielsweise eine Konusfläche sein. Als günstig hat sich ein Winkel der Schrägfläche von etwa 25° zu einer axialen Richtung herausgestellt. Die Schrägfläche und ihr Winkel sind im Hinblick auf eine niedrige Schnittkraft gewählt. Weiterer Vorteil ist, dass die Schrägfläche die Blindniete beim Durchdringen des oder der Bleche im Bereich der Ringschneide nach innen umformt, die Mündung des Hohlraums innerhalb der Ringschneide wird dadurch verkleinert, das beim Durchdringen des oder der Bleche in den Hohlraum gelangende Schnittabfallteil wird im Hohlraum quasi "eingeschlossen". Das Schnittabfallteil ist formschlüssig und unlösbar im Hohlraum der Blindniete gehalten. Die Schrägfläche außen an der Ringschneide formt die Blindniete jedenfalls dann nach innen um, wenn die Blindniete im Bereich der Ringschneide nicht gehärtet ist.

Eine Ausgestaltung der Erfindung sieht eine rinnenartige, in Längsrichtung der Blindniete verlaufende Vertiefung an der Unterbrechung der Ringschneide an einer Außenseite der Blindniete vor. Die Vertiefung verringert die Schnittkraft und biegt das nicht vom Blech abgetrennte Schnittabfallteil zur Seite.

Eine Ausgestaltung der Erfindung sieht eine Befestigungseinrichtung zum Befestigen eines Gegenstands an der Blindniete vor. Die Befestigungseinrichtung kann an einem Schaft des Spreizkörpers vorgesehen sein. Es kann sich um ein Gewinde zum lösbaren Befestigen eines Gegenstands handeln. Auch kann die Befestigung durch Nieten, d.h. durch Umformen des Schafts zu einem Nietkopf oder Bördeln nach außen erfolgen. Auch ein Haken, eine Öse oder dgl. am Schaft des Spreizkörpers können die Befestigungseinrichtung bilden.

Eine Ausgestaltung der Erfindung sieht vor, dass die Blindniete lösbar ist. Das Lösen der Blindniete kann dadurch erfolgen, dass der Spreizkörper aus der Spreizhülse herausgeschoben und anschließend die Blindniete aus dem oder den Blechen herausgezogen wird.

Die Erfindung wird nachfolgend an Hand eines in der Zeichnung dargestellten Ausführungsbeispiels näher erläutert.

Es zeigen:
- Figur 1: eine erfindungsgemäße Blindniete in Seitenansicht;
- Figur 2: ein Spreizkörper der Blindniete aus Figur 1 in Seitenansicht;
- Figur 3: einen vorderen Bereich des Spreizkörpers aus Figur 2 in einer um 90° gegenüber Figur 2 gedrehten Darstellung;
- Figur 4: eine Stirnansicht des Spreizkörpers gemäß Pfeil IV in Figur 2;
- Figur 5: eine perspektivische Darstellung des Spreizkörpers aus Figur 2 in kleinerem Maßstab;
- Figur 6: eine Spreizhülse der Blindniete aus Figur 1 in Seitenansicht;
- Figur 7: eine Abwicklung der Spreizhülse aus Figur 6;
- Figur 8: eine Mutter der Blindniete aus Figur 1 in Seitenansicht in einem Halbschnitt; und
- Figur 9: die Blindniete aus Figur 1 in vernietetem Zustand.

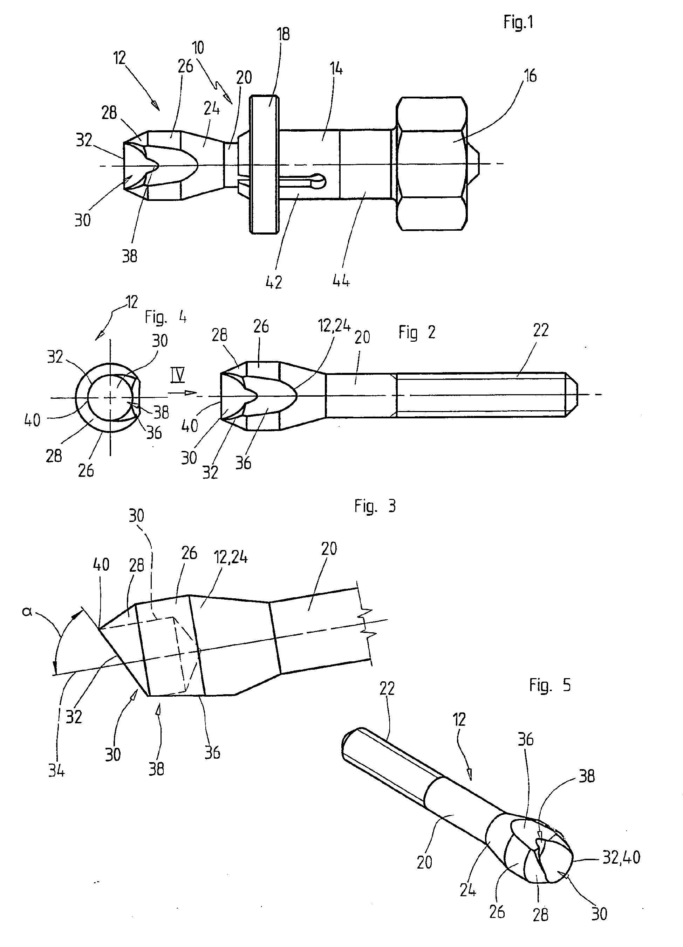

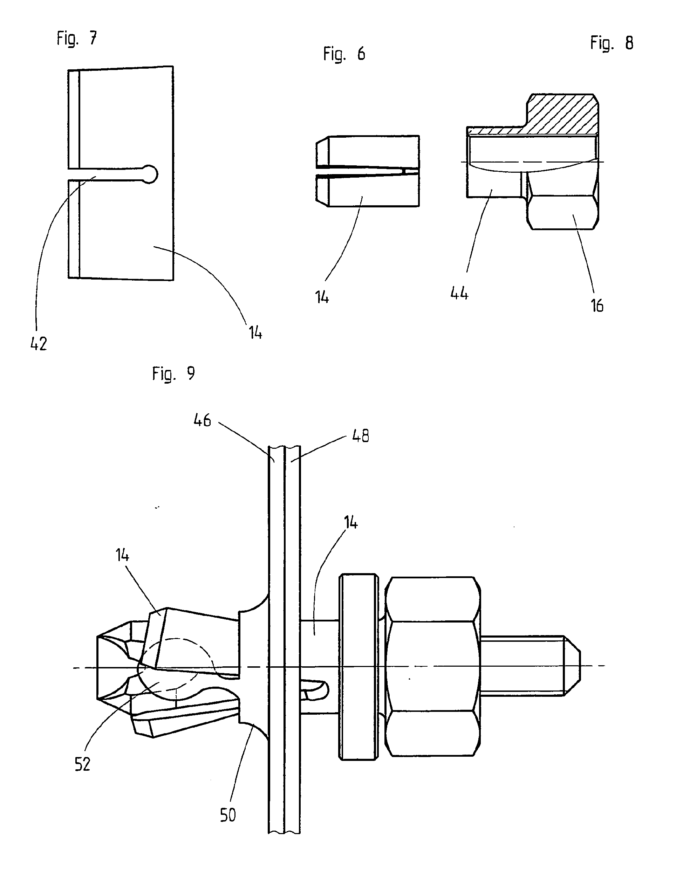

Die in Figur 1 dargestellte, erfindungsgemäße Blindniete 10 ist zum Nieten an einseitig zugänglichen Blechen beispielsweise im Karosseriebau vorgesehen. Die Blindniete 10 weist den in Figuren 2 bis 5 dargestellten Spreizkörper 12 und die in Figuren 6 und 7 dargestellte Spreizhülse 14 auf. Des Weiteren weist die Blindniete 10 die in Figur 8 dargestellte Mutter 16 mit Buchse und eine Unterlegscheibe 18 auf.

Der Spreizkörper 12 weist einen Schaft 20 mit einem Gewinde 22 auf. Der Schaft 20 geht einstückig in eine sich vom Schaft 20 weg konisch erweiternde Spreizfläche 24 über, die den eigentlichen Spreizkörper bildet. An die Spreizfläche 24 schließt sich ein zylindrischer Abschnitt 26 und daran eine konische Verjüngung 28 an. Eine axiale, zylindrische Ansenkung innerhalb der konischen Verjüngung 28 und des zylindrischen Abschnitts 26 bildet einen Hohlraum 30. Die konische Verjüngung 28 und die den Hohlraum 30 bildende Ansenkung bilden eine scharfkantige Ringschneide 32, die wie in Figur 3 zu sehen, nicht in einer Radialebene sondern in einer gedachten Ebene, die in einem Winkel α von ungefähr 55° zu einer gedachten Achse 34 des Spreizkörpers 12 und seines Schafts 20 verläuft. Die konische Verjüngung 28 bildet eine Schrägfläche 28, die sich außen an die Ringschneide 32 anschließt. Die Schrägfläche 28 weist einen Kegelwinkel von ungefähr 50° auf, d.h. die Schrägfläche 28 verläuft unter einem Winkel von ungefähr 25° von der Ringschneide 32 aus schräg nach außen.

An einer Stelle des Umfangs weist der Spreizkörper 12 eine rinnenartige, in Längsrichtung unter einem Winkel von ungefähr 10° verlaufende Vertiefung 36 auf, die in Querrichtung konkav gewölbt ist. Die Vertiefung 36 ist in radialer Richtung so tief, dass ein Durchbruch 38 in den Hohlraum 30 gebildet und die Ringschneide 32 unterbrochen ist. Die Vertiefung 36 läuft im Bereich der Spreizfläche 24 aus. Die schräg verlaufende Ringschneide 32 weist eine höchste, d.h. in axialer Richtung am weitesten vorn befindliche Stelle 40 gegenüber ihrer Unterbrechung auf.

Die in Figur 6 dargestellte Spreizhülse 14 ist ein rohrförmig gebogenes Blechstanzteil, das in Figur 7 in Abwicklung dargestellt ist. Zur leichteren Spreizbarkeit weist die Spreizhülse 14 einen sich fast über ihre gesamte Axiallänge erstreckenden Längsschlitz 42 auf, der an einem vorderen Stirnrand offen ist. Der vordere Stirnrand ist der der Spreizfläche 24 zugewandte Stirnrand der Spreizhülse 14. Wie in Figur 1 zu sehen befindet sich die Spreizhülse 14 verschiebbar auf dem Schaft 20 des Spreizkörpers 12. Sie ist durch Aufschieben auf die Spreizfläche 24 bzw. durch Einziehen der Spreizfläche 24 in die Spreizhülse 14 aufspreizbar und dadurch nietbar. Die Spreizhülse 14 kann als Hohlniete aufgefasst werden.

Die in Figur 8 dargestellte Mutter 16 weist einen axial abstehenden, rohrförmigen Kragen 44 auf. Im Übrigen handelt es sich um eine gewöhnliche Sechskantmutter. In Figur 1 ist die Mutter 16 auf das Gewinde 22 des Schafts 20 des Spreizkörpers 12 aufgeschraubt, der Bund 44 ist in Richtung der Spreizhülse 14 gerichtet, er stößt gegen die Spreizhülse 14.

Die Unterlegscheibe 18 befindet sich auf der Spreizhülse 14 oder dem Kragen 44 der Mutter 16.

Die erfindungsgemäße Blindniete 10 lässt sich an einem nur einseitig zugänglichen Blech vernieten. In Figur 9 ist diese Nietung der Blindniete 10 an zwei aneinanderliegenden Blechen 46, 48 dargestellt, die durch die Blindniete 10 miteinander verbunden sind. Die Blindniete 10 wird, so wie sie in Figur 1 dargestellt ist, mit hoher Geschwindigkeit durch die Bleche 46, 48 durchgeschossen oder durchgeschlagen, wobei die Bezeichnung mit "Durchschießen" oder "Durchschlagen" nicht einschränkend sein soll. Die Geschwindigkeit und Energie, die ein handelsübliches Bolzenschusswerkzeug aufbringt, genügt, damit die Blindniete 10 die beiden Bleche 46, 48 durchdringt. Beim Durchdringen der Bleche 46, 48 schneidet die Ringschneide 32-ein Loch für die Blindniete 10 in die Bleche 46, 48. Das Schneiden des Lochs kann auch als Stanzen bezeichnet werden. Ein Gegenhalten der Bleche 46, 48 ist nicht erforderlich, die Blindniete 10 formt beim Durchdringen der Bleche 46, 48 einen kraterartigen Einzug 50, dessen Höhe etwa einer Blechdicke entspricht. Da kein Gegenhalter zum Lochschneiden notwendig ist, ist ein Blindnieten, d.h. ein Nieten bei nur einseitiger Zugänglichkeit der Bleche 46, 48 möglich.

Der schräge Verlauf der Ringschneide 32 verringert die Schnittkraft, da nicht über den gesamten Umfang gleichzeitig auf einmal geschnitten wird, sondern der Schnitt an der höchsten Stelle 40 der Ringschneide 32 beginnt und sich in beiden Umfangsrichtungen fortsetzt. Der schräge Verlauf der Ringschneide 32 ermöglicht oder trägt jedenfalls dazu bei, dass das Loch für die Blindniete 10 ohne Gegenhalter und mit einem Einzug 50 von akzeptabel kleiner Höhe möglich ist.

Weiterer Grund für den schrägen Verlauf der Ringschneide 32 ist, die Blindniete 10 gerade, d.h. senkrecht zu den Blechen 46, 48 setzen zu können. Eine zum Spreizkörper 12 radial verlaufende Ringschneide 32 würde wegen ihrer Unterbrechung zu einer Schiefstellung der Blindniete 10 in den Blechen 46, 48 führen.

Ein beim Durchdringen der beiden Bleche 46, 48 von der Ringschneide 32 ausgeschnittenes Schnittabfallteil (Ronde) eines der beiden Bleche 48 gelangt in den Hohlraum 30, in dem es durch Klemmkraft und ggf. zusätzlich durch ein Kaltverschweißen zuverlässig gehalten ist. Ist der Spreizkörper 12 im Bereich der Ringschneide 32 nicht gehärtet, formt die Schrägfläche 28 sich beim Durchgang durch die Bleche 46, 48 nach innen um und bildet dadurch eine Hinterschneidung, die das Schnittabfallteil zusätzlich im Hohlraum 30 hält. Die Umformung des Spreizkörpers 12 im Bereich der Schrägfläche 28 beim Blechdurchgang nach innen gibt eine zusätzliche Sicherheit gegen Herausfallen des Schnittabfallteils aus dem Hohlraum 30, die allerdings verzichtbar ist. Das Schnittabfallteil ist auch dann zuverlässig gegen Herausfallen im Hohlraum 30 gehalten, wenn der Spreizkörper 12 im Bereich der Schrägfläche 28 gehärtet ist und sich deswegen nicht nach innen umformt. Ein Härten der Ringschneide 32 ist also möglich.

Ein beim Lochschneiden von der Ringschneide 32 aus dem anderen Blech 46 geschnittenes Schnittabfallteil 52 wird wegen der Unterbrechung der Ringschneide 32 nicht vom Blech 46 abgetrennt, sondern zur Seite gebogen. Beim Lochschneiden mit der Blindniete 10 entstehen somit keine losen Schnittabfallteile. Die Blindniete 10 ist dadurch auch an unzugänglichen Hohlräumen vernietbar, aus denen lose Schnittabfallteile nicht entfernt werden können. Ein Klappern durch losen Schnittabfall ist nicht zu befürchten.

Durch Drehen der Mutter 16 auf dem Gewinde 22 des Spreizkörpers 12 wird die Spreizhülse 14 auf die Spreizfläche 24 geschoben und wie in Figur 9 zu sehen gespreizt. Sie hintergreift die Bleche 46, 48. Die Blindniete 10 ist dadurch mit den Blechen 46, 48 vernietet und verbindet die Bleche 46, 48 miteinander. Das Gewinde 22 des Spreizkörpers 12 kann zur lösbaren Befestigung eines nicht dargestellten Gegenstands an den Blechen 46, 48 genutzt werden.

Sofern die Blindniete 10 wieder gelöst werden soll, wird die Mutter 16 gelöst, wonach sich der Spreizkörper 12 aus der Spreizhülse 14 herausdrücken lässt. Die zwangsweise Aufspreizung der Spreizhülse 14 ist dadurch aufgehoben und die Spreizhülse 14 und der Spreizkörper 12 lassen sich aus den Blechen 46, 48 herausziehen. Auch das Lösen der Blindniete 10 ist bei ausschließlich einseitigem Zugang möglich.

Die Blindniete 10 lässt sich auch an einem anstatt zwei Blechen vernieten, um beispielsweise eine Möglichkeit zur Befestigung eines Gegenstands zu schaffen. In diesem Fall genügt entweder der Hohlraum 30 zur Aufnahme des Schnittabfallteils oder die Unterbrechung der Ringschneide 32, damit das Schnittabfallteil zur Seite gebogen und nicht vollständig vom Blech getrennt wird.

Die Blindniete 10 hat einen Durchmesser des Gewindes 22 von M5, der zylindrische Abschnitt 26 des Spreizkörpers 12 hat ebenso wie die Spreizhülse 14 einen Durchmesser von 6 mm, der zumindest näherungsweise dem Lochdurchmesser in den Blechen 46, 48 entspricht, die Ringschneide 32 hat einen Durchmesser von 4 mm. Es sind selbstverständlich andere Abmessungen und Größen möglich.

## Patentansprüche

1. Blindniete, mit einem Spreizkörper (12) und mit einer Spreizhülse (14), die durch Aufschieben auf den Spreizkörper (12) aufweitbar ist, und mit einer Ringschneide (32) zum Schneiden eines Lochs zum Vernieten der Blindniete (10), **dadurch gekennzeichnet, dass** die Ringschneide (32) unterbrochen ist.

2. Blindniete nach Anspruch 1, **dadurch gekennzeichnet, dass** die Blindniete (10) einen Hohlraum (30) innerhalb der Ringschneide (32) zur Aufnahme eines Schnittabfallteils aufweist.

3. Blindniete nach Anspruch 1, **dadurch gekennzeichnet, dass** die Ringschneide (32) zumindest auf einem Abschnitt schräg zu einer gedachten Radialebene der Blindniete (10) verläuft.

4. Blindniete nach Anspruch 1, **dadurch gekennzeichnet, dass** die Ringschneide (32) mit einem Winkel von etwa 55° schräg zu einer Axialrichtung der Blindniete (10) verläuft.

5. Blindniete nach Anspruch 3, **dadurch gekennzeichnet, dass** die Ringschneide (32) eine höchste Stelle (40) gegenüber einer Unterbrechung aufweist.

6. Blindniete nach Anspruch 1, **dadurch gekennzeichnet, dass** sich außen an die Ringschneide (32) eine schräg nach außen verlaufende Schrägfläche (28) anschließt.

7. Blindniete nach Anspruch 6, **dadurch gekennzeichnet, dass** die Schrägfläche (28) einen Winkel von etwa 25° zu einer axialen Richtung aufweist.

8. Blindniete nach Anspruch 1, **dadurch gekennzeichnet, dass** die Blindniete (10) eine rinnenartige, in Längsrichtung der Blindniete (10) verlaufende Vertiefung (36) an der Unterbrechung der Ringschneide (32) an einer Außenseite der Blindniete (10) aufweist.

9. Blindniete nach Anspruch 1, **dadurch gekennzeichnet, dass** die Blindniete (10) eine Befestigungseinrichtung (22) zum Befestigen eines Gegenstands an der Blindniete (10) aufweist.

10. Blindniete nach Anspruch 1, **dadurch gekennzeichnet, dass** die Blindniete (10) lösbar ist.

## Claims

1. Blind rivet, having an expander body (12) and having an expansion sleeve (14), which can be expanded by being pushed onto the expander body (12), and having an annular cutter (32) for cutting a hole for riveting with the blind rivet (10), **characterized in that** the annular cutter (32) includes a gap.

2. Blind rivet according to claim 1, **characterized in that** the blind rivet (10) has a cavity (30) inside the annular cutter (32) for receiving the waste material cut out.

3. Blind rivet according to claim 1, **characterized in that** the annular cutter (32), at least over a portion, runs obliquely with respect to a notional radial plane of the blind rivet (10).

4. Blind rivet according to claim 1, **characterized in that** the annular cutter (32) runs at an angle of about 55° obliquely with respect to the axial direction of the blind rivet (10).

5. Blind rivet according to claim 3, **characterized in that** the annular cutter (32) has its highest point (40) opposite a gap.

6. Blind rivet according to claim 1, **characterized in that** the annular cutter (32) is adjoined on the outside by a sloping face (28) running obliquely outwards.

7. Blind rivet according to claim 6, **characterized in that** the sloping face (28) has an angle of about 25° with respect to the axial direction.

8. Blind rivet according to claim 1, **characterized in that** on the outer side of the blind rivet (10), at the gap in the annular cutter (32), the blind rivet (10) has a channel-like hollow (36) running in the longitudinal direction of the blind rivet (10).

9. Blind rivet according to claim 1, **characterized in that** the blind rivet (10) has an attachment device (22) for attaching an article to the blind rivet (10).

10. Blind rivet according to claim 1, **characterized in that** the blind rivet (10) is removable.

## Revendications

1. Rivet borgne comprenant un corps déployable (12) et une douille déployable (14) pouvant être élargie par enfilement sur ledit corps déployable (12), ainsi qu'un tranchant annulaire (32) destiné au découpage d'un trou en vue de la pose dudit rivet borgne (10), **caractérisé par le fait que** ledit tranchant annulaire (32) est discontinu.

2. Rivet borgne selon la revendication 1, **caractérisé par le fait que** ledit rivet borgne (10) présente, à l'intérieur du tranchant annulaire (32), une cavité (30) conçue pour recevoir une partie des déchets de coupe.

3. Rivet borgne selon la revendication 1, **caractérisé par le fait que** le tranchant annulaire (32) s'étend, au moins sur un tronçon, à l'oblique vis-à-vis d'un plan radial imaginaire dudit rivet borgne (10).

4. Rivet borgne selon la revendication 1, **caractérisé par le fait que** le tranchant annulaire (32) s'étend à l'oblique, selon un angle d'environ 55°, vis-à-vis d'une direction axiale dudit rivet borgne (10).

5. Rivet borgne selon la revendication 3, **caractérisé par le fait que** le tranchant annulaire (32) offre une zone (40) de hauteur maximale par rapport à une discontinuité.

6. Rivet borgne selon la revendication 1, **caractérisé par le fait qu'**une surface inclinée (28), s'étendant à l'oblique vers l'extérieur, se rattache extérieurement au tranchant annulaire (32).

7. Rivet borgne selon la revendication 6, **caractérisé par le fait que** la surface inclinée (28) offre un angle d'environ 25° vis-à-vis d'une direction axiale.

8. Rivet borgne selon la revendication 1, **caractérisé par le fait que** ledit rivet borgne (10) comporte un renfoncement (36) de type rainure s'étendant dans la direction longitudinale dudit rivet borgne (10), au niveau de la discontinuité du tranchant annulaire (32), à la face extérieure dudit rivet borgne (10).

9. Rivet borgne selon la revendication 1, **caractérisé par le fait que** ledit rivet borgne (10) présente un système de fixation (22) dédié à la fixation d'un objet audit rivet borgne (10).

10. Rivet borgne selon la revendication 1, **caractérisé par le fait que** ledit rivet borgne (10) peut être enlevé.
